# EUROPEAN PATENT SPECIFICATION

(11) **EP 0 662 398 B1**
(45) Date of publication and mention of the grant of the patent: **14.10.1998**
(21) Application number: 94203704.5
(22) Date of filing: 20.12.1994
(51) Int. Cl.: B60J 1/02, G09F 21/04

(54) **Vehicle with S-shape curved windscreen**
Fahrzeug mit in S-Form gebogener Windschutzschreibe
Véhicule à pare-brise courbé en forme de S

(30) Priority: 07.01.1994 NL 9400030
(43) Date of publication of application: 12.07.1995
(73) Proprietor: Berkhof Heerenveen B.V., NL-8447 GC Heerenveen (NL)
(72) Inventor: Syoen, Willy Omer, NL-8442 CD Heerenveen (NL)
(74) Representative: 't Jong, Bastiaan Jacobus

(56) References cited:
- EP-A- 0 398 337
- EP-A- 0 444 558
- DE-B- 2 659 538
- FR-A- 2 506 229
- GB-A- 443 838
- PATENT ABSTRACTS OF JAPAN vol. 9 no. 191 (M-402) ,7 August 1985 & JP-A-60 056627 (KAWAJIYUU SHIYATAI KOGYO) 2 April 1985,

## Description

The invention relates to a vehicle as defined in the introductory part of claim 1.

Such a vehicle in the form of a bus is known from DE-B-2 659 538. The sign visible from the outside comprises a route indication such as a route number. Vehicles of this kind can however also be for instance trams, wherein the sign visible from the outside can likewise contain a route indication, or trucks of vans, wherein the visible sign can then be a name or advertizing material.

In the known vehicle the sign visible from the outside is integrated in the front of the vehicle and is well visible under all conditions.

The invention has for its object to provide a vehicle of the kind set forth above, having an improved construction while maintaining an effective integration and a good visibility of the sign.

According to the invention this object is obtained with the measures as defined in the characterizing portion of claim 1. In this way, the construction is simpler as the sign does not have to be mounted so as to be protected from outside influences, as with the prior art. Because the sign is arranged behind the upper concave curved portion of the windscreen, it remains well visible under all conditions. Reflections in the shiny surface of the windscreen do not obstruct the view of the sign, or hardly so. A favourable embodiment is characterized in claim 2. The windscreen can be manufactured relatively simply during production starting from a flat sheet of glass.

According to a further development the step of claim 3 is applied. An aesthetically attractive appearance is hereby obtained, while when the convex curve is a considerable one a favorable effect is moreover achieved on the air resistance of the vehicle.

The portion of the windscreen visible to the driver has from his point of view a practically wholly concave curve when the step of claim 4 is applied. Troublesome reflections of light sources from the interior are hereby avoided to a considerable extent.

In the vehicle according to claim 5 the lower portion of the windscreen slopes toward the driver whereby light sources situated behind the driver which are normally at eye level or higher are not reflected visibly to the driver in the windscreen. The driver hereby retains a clear view of the road, also during darkness and with a lighted interior of the vehicle.

Windscreens having a substantially S-shaped curvature in a vertical section are known as such, for instance from GB-A-443 838 and EP-A-0 398 337. However, these known windscreens have a substantially S-shaped curvature in a vertical section with a convex curve at the upper side and a concave curve at the lower side.

The invention will be further elucidated in the following description with reference to the embodiments shown in the figures.
Fig. 1 shows a perspective view of a vehicle according to the invention in the form of a bus.
Fig. 2 is a partly broken away side view of the bus of fig. 1 wherein the windscreen is drawn in vertical cross section.
Fig. 3 shows an actual embodiment of a windscreen for a vehicle according to the invention.
Fig. 4, 5 and 6 shows sections according to respectively the lines IV-IV, V-V and VI-VI in fig. 3.
Fig. 7 shows a vehicle according to the invention in another embodiment.

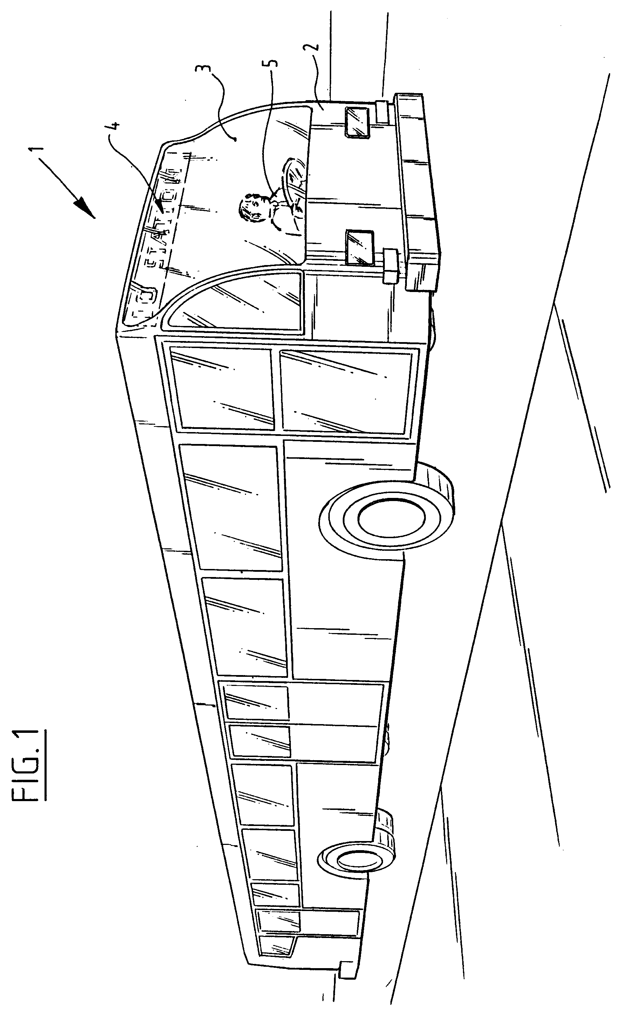

The bus 1 shown in fig. 1 has a windscreen 3 on its front 2 in the usual manner so that the driver 5 and partly also the passengers can look ahead in the travel direction.

In the usual manner the bus 1 has a route indication 4 which in this case consists of a route number and the name of the terminal.

This sign is arranged behind the upper portion of windscreen 3 and is visible from the outside through windscreen 3.

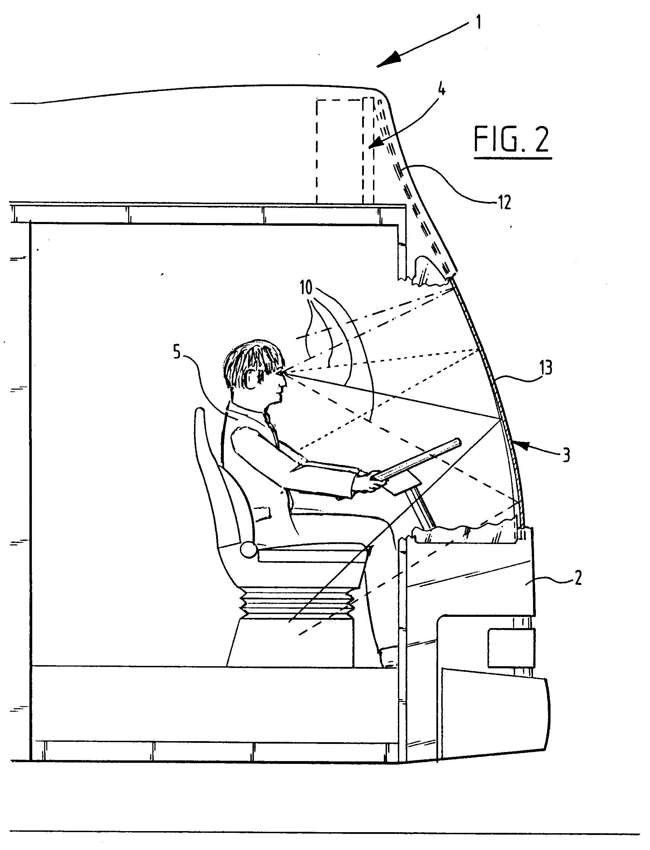

As is made clear in fig. 1, and even more so in fig. 2, windscreen 3 has in vertical cross section a substantially S-shaped curvature. The upper portion 12 of windscreen 3 is curved concavely outward and behind this portion 12 is arranged the route indication or sign 4. The lower portion 13 of windscreen 3 is curved convexly outward.

Because the sign 4 is arranged behind the concavely curved portion 12 of the windscreen, the view hereof is not impeded by reflections, in particular from a bright sky, or only to an insignificant extent. Due to the concave curvature of the upper portion 12 the line of view of someone looking from outside the vehicle 1 lies at a relatively large angle to the surface of windscreen 3 whereby a good view is obtained.

As fig. 2 shows, the change in curvature of windscreen 3 is located between a quarter and a third of the height of the windscreen from the top. The lower portion 13 which serves to provide the driver 5 with the view to the outside is hereby curved concavely toward the driver 5. In the embodiment shown the windscreen 3 is further arranged such that in the vertical cross section of fig. 2 a tangent on the bottom edge extends substantially vertically. The lower portion 13 thus inclines toward the driver 5 and from his point of view has a concave curve.

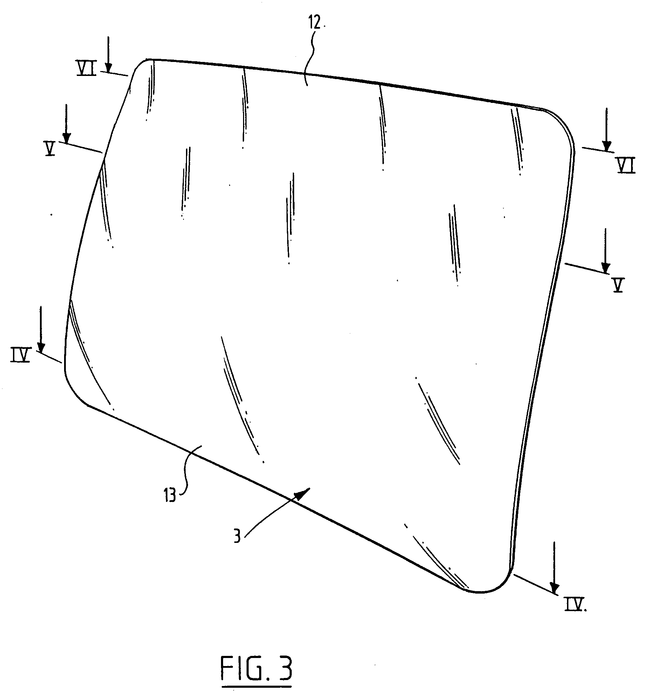

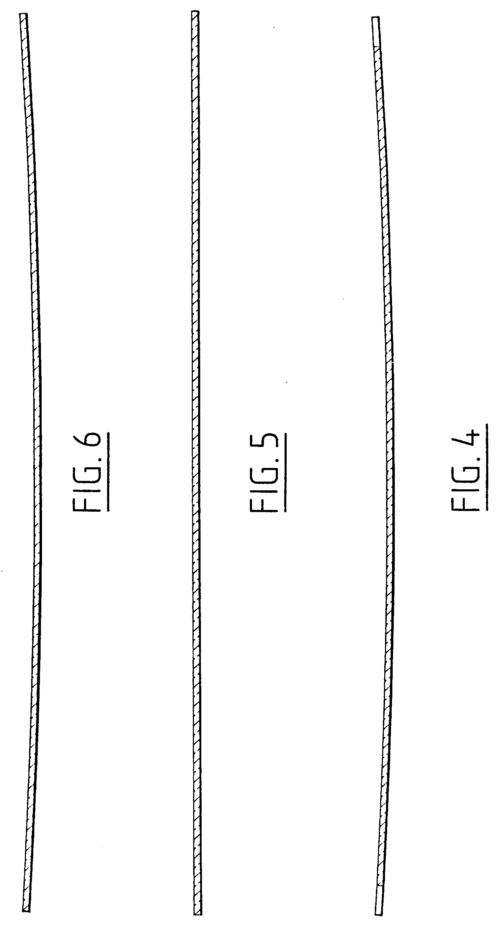

With the lines of view 10 is indicated that only light from a low part at the front of the bus can reflect visibly to the driver 5 in the windscreen 3. Lighting elements in the bus which are normally located at eye level or higher behind driver 5 can hereby not reflect visibly to the driver 5 in the windscreen 3. Also when it is dark and the interior is lighted the driver 5 thus retains an unimpeded view of the road. Fig. 3 shows an embodiment of the windscreen 3 as applied in the bus of fig. 1 and 2. The change in curvature is located at the position of line 5. As fig. 5 shows, the windscreen is straight at the position of this change in curvature. In the upper portion 12 and the lower portion 13 the windscreen has respectively a concave and convex curve in vertical direction and a convex curve in horizontal direction, as shown in fig. 4 and 6. In this embodiment the curvature is comparatively limited whereby the windscreen is relatively simple to manufacture. The curvature of windscreen 3 is thus substantially two-dimensional. The three-dimensional curvature of windscreen 3 is only very limited.

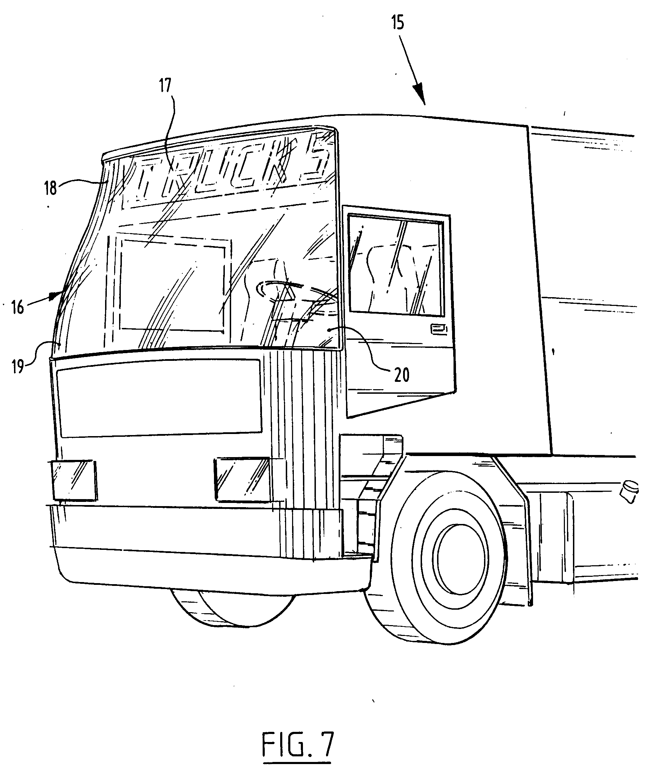

According to another embodiment it is however possible also to curve the windscreen considerably in three-dimensional direction. Such an embodiment is shown in fig. 7. Windscreen 16 of the truck 15 shown therein is provided close to the top of the front side with a sign 17 which may be a company name designation or advertising material. This sign 17 is situated behind the upper portion 18 of windscreen 16 which has a concave curve. The lower portion 19 of windscreen 16 has a convex curve as seen on the outside. In horizontal section the windscreen 16 is curved convexly over the whole height. The curvature is such that side window parts 20 are integrated into the windscreen 16.

It is noted that in the above description the designations concave and convex are given in each case as seen from the outside unless expressly stated otherwise.

## Claims

1. Vehicle (1) comprising a windscreen (3) and having a sign (4) visible from outside on its front side (2) close to the top, characterized in that the windscreen (3) has a substantially S-shaped curvature in vertical section with a concave curve at the upper side (12) and a convex curve at the lower side (13) as is perceptible from outside the vehicle (1), and in that the sign (4) is arranged behind the upper portion (12) of the windscreen (3).

2. Vehicle as claimed in claim 1, wherein the windscreen (3) has a straight horizontal section at the position of the change of curvature (V-V).

3. Vehicle as claimed in claim 2, wherein the portion (19) of the windscreen (16) below the change of curvature is curved in three-dimensional convex form as perceptible from outside the vehicle (11).

4. Vehicle as claimed in claim 2 or 3, wherein the portion (18) of the windscreen (16) above the change of curvature is curved in a convex form in horizontal section as perceptible from outside the vehicle (11).

5. Vehicle as claimed in any of the foregoing claims, wherein the change of curvature (V-V) is situated between a quarter and a third of the height from the top.

6. Vehicle as claimed in any of the foregoing claims, wherein the windscreen (3, 16) is arranged such that in vertical section a tangent on the lower edge extends substantially vertically.

7. Vehicle as claimed in any of the foregoing claims, being a bus (1), wherein the sign comprises a route indication (4).

## Patentansprüche

1. Fahrzeug (1), das eine Windschutzscheibe (3) und ein von außen sichtbares Zeichen (4) aufweist, das an dessen Vorderseite (2) nahe des oberen Bereichs angordnet ist, **dadurch gekennzeichnet,** daß die Windschutzscheibe (3) im vertikalen Bereich eine im wesentlichen S-förmige Krümmung mit einer konkaven Krümmung im oberen Bereich (12) und einer konvexen Krümmung im unteren Bereich (13), gesehen von außerhalb des Fahrzeugs (1), aufweist, und daß das Zeichen hinter dem oberen Bereich (12) der Windschutzscheibe (3) angeordnet ist.

2. Fahrzeug nach Anspruch 1, bei dem die Windschutzscheibe (3) an der Stelle der Krümmungsänderung (V-V) einen gerade verlaufenden, horizontalen Bereich aufweist.

3. Fahrzeug nach Anspruch 2, bei dem der Bereich (19) der Windschutzscheibe (16) unterhalb der Krümmungsänderung in dreidimensionaler konvexer Form, gesehen von außerhalb des Fahrzeugs (11), gekrümmt ist.

4. Fahrzeug nach Anspruch 2 oder 3, bei dem der Bereich (18) der Windschutzscheibe (16) über der Krümmungsänderung in einem horizontalen Bereich in konvexer Form, gesehen von außerhalb des Fahrzeug (11), gekrümmt ist.

5. Fahrzeug nach einem der vorhergehenden Ansprüche, bei dem die Krümmungsänderung (V-V) zwischen einem Viertel und einem Drittel der Höhe von dem oberen Ende angeordnet ist.

6. Fahrzeug nach einem der vorhergehenden Ansprüche, bei dem die Windschutzscheibe (3, 16) derart angeordnet ist, daß sich in einem vertikalen Bereich eine Tangente an der unteren Kante im wesentlichen vertikal erstreckt.

7. Fahrzeug nach einem der vorhergehenden Ansprüche, das ein Bus (1) ist, bei dem das Zeichen eine Wegstrecken-Angabe (4) umfaßt.

## Revendications

1. Véhicule (1) comprenant un pare-brise (3) et ayant un signe (4) visible depuis l'extérieur du côté avant (2) près de sa partie supérieure, caractérisé en ce que le pare-brise (3) a une courbure pratiquement en S en coupe verticale, avec une courbure concave du côté supérieur (12) et une courbure convexe du côté inférieur (13) perceptible depuis l'extérieur du véhicule (1), et en ce que le signe (4) est placé derrière la partie supérieure (12) du pare-brise (3).

2. Véhicule selon la revendication 1, dans lequel le pare-brise (3) a une section horizontale rectiligne à l'emplacement du changement de courbure (V-V).

3. Véhicule selon la revendication 2, dans lequel la partie (19) du pare-brise (16) qui se trouve au-dessous du changement de courbure a une courbure convexe tridimensionnelle perceptible depuis l'extérieur du véhicule (11).

4. Véhicule selon la revendication 2 ou 3, dans lequel la partie (18) du pare-brise (16) qui se trouve au-dessus du changement de courbure est courbée avec une forme convexe en coupe horizontale perceptible depuis l'extérieur du véhicule (11).

5. Véhicule selon l'une quelconque des revendications précédentes, dans lequel le changement de courbure (V-V) est placé entre le quart et le tiers de la hauteur depuis la partie supérieure.

6. Véhicule selon l'une quelconque des revendications précédentes, dans lequel le pare-brise (3, 16) est disposé afin que, en coupe verticale, une tangente au bord inférieur soit pratiquement verticale.

7. Véhicule selon l'une quelconque des revendications précédentes, constituant un autobus (1), dans lequel le signe est une indication d'itinéraire (4).
